**Europäisches Patentamt**

**European Patent Office**

**Office européen des brevets**

(19)

(11) Veröffentlichungsnummer: **0 123 065**
**B1**

(12)

# EUROPÄISCHE PATENTSCHRIFT

(45) Veröffentlichungstag der Patentschrift:
**18.01.89**

(51) Int. Cl.⁴: **B 23 Q 7/18, B 23 Q 16/00**

(21) Anmeldenummer: **84102163.7**

(22) Anmeldetag: **01.03.84**

(54) **Sägeanlage zum Abtrennen von Teilstücken aus Profilen.**

(30) Priorität: **19.04.83 DE 3314114**

(43) Veröffentlichungstag der Anmeldung:
**31.10.84 Patentblatt 84/44**

(45) Bekanntmachung des Hinweises auf die Patenterteilung:
**18.01.89 Patentblatt 89/3**

(84) Benannte Vertragsstaaten:
**FR GB IT SE**

(56) Entgegenhaltungen:
**DE-B- 1 103 718**
**DE-C- 155 162**
**DE-C- 632 149**
**NL-A- 8 006 760**
**US-A- 1 800 382**
**US-A- 3 811 548**

(73) Patentinhaber: **Lindner, Karl-Rainer,**
**Stockhausstrasse 11, D-4010 Hilden im Rheinland (DE)**

(72) Erfinder: **Lindner, Karl-Rainer, Stockhausstrasse 11,**
**D-4010 Hilden im Rheinland (DE)**

(74) Vertreter: **Selting, Günther et al, Patentanwälte Von**
**Kreisler-Schönwald-Fues-Keller Selting-Werner**
**Deichmannhaus am Hauptbahnhof, D-5000 Köln 1 (DE)**

**Beschreibung**

Die Erfindung betrifft eine Vorrichtung zum axialen und radialen Positionieren von langgestreckten Profilen, insbesondere mit vielen Lochungen versehenen Rohren in einer Anlage mit einer Säge zum Abtrennen von Teilstücken an vorbestimmter Stelle, wobei die Profile an ihrer Oberseite mit in Abständen befindlichen Rastermarken in Gestalt von Erhebungen oder Vertiefungen versehen sind, insbesondere von quer zu ihrer Längserstreckung verlaufenden, durch Ausstanzung erhaltenen Einschnitten geringer Länge.

Eine derartige Vorrichtung ist bekannt.

Profile vorgenannter Ausbildung finden u.a. als Rohre, die mit einer Vielzahl von Lochungen versehen sind als Teile von Schalldämpfern in Auspuffanlagen von Kraftfahrzeugen Anwendung.

Abhängig von dem System des Schalldämpfers, dessen Bemessung und sonstigen Erfordernissen, haben die Lochungen in dem Schalldämpferrohr, die sich in der Regel über den Umfang des Rohres erstrecken, eine Fläche bestimmter Länge. Die Länge dieser mit Lochungen versehenen Fläche ist bei verschiedenen Auspuffsystemen und Auspuffgrössen unterschiedlich. Innerhalb des Auspuffes hat diese Fläche eine vorbestimmte Ortslage. Um diese zu gewährleisten, hat die mit Lochungen versehene Fläche zu dem vorderen Ende oder hinteren Ende des Auspuffrohres einen bestimmten Abstand.

Auspuffrohre bestehen aus dem mit Lochungen versehenen inneren Rohr und einem Aussenrohr. Beide Rohre sind durch stirnseitige Scheiben verbunden. Da Auspuffrohre dicht sein müssen, weil sie sonst in ihrer Wirkung nachlassen oder ihre schalldämpfenden Eigenschaften stark vermindert werden, ist es notwendig, die miteinander durch die stirnseitigen Scheiben zu verschweissenden Innenrohre und Aussenrohre von stets gleicher vorbeschriebener Länge herzustellen. Dies hat aber in der Praxis verschiedene Schwierigkeiten, die aus folgenden Gründen herrühren.

Zum Herstellen des mit Lochungen versehenen Rohres wird ausgegangen von einem langgestreckten Blechstreifen. In diesem werden in einem vorgesehenen Feld eine Vielzahl von Lochungen durch ein Stanzwerkzeug gleichzeitig angebracht. Die Länge des späteren Auspuffinnenrohres und der Abstand des mit Lochungen versehenen Feldes zur Vorderkante oder zur Hinterkante des Innenrohres wird bestimmt durch eine am Zuschnitt vorhandene Markierung. Diese Markierung besteht in der Regel aus einem Schnitt, der sich quer zur Längserstreckung des späteren Auspuffrohres erstreckt. Dieser Einschnitt geringer Länge wird zugleich in einem Arbeitsgang mit einem Werkzeug zur Herstellung der vielen Lochungen angebracht, damit dieser Einschnitt zu dem Feld der Lochungen einen stets gleichbleibenden Abstand hat.

Nach dem Herstellen des Lochbildes und der Markierung wird das Flachband zu einem Rohr gebogen und längsverlaufend geschweisst. Dieser Bearbeitungsvorgang wird auch als Ziehen des Rohres bezeichnet. Dabei kommt es zu Streckungen im Rohrmaterial. Diese Streckungen, die dazu führen, dass runde Lochungen in Längsrichtung des Rohres geringfügig oval sind, haben abhängig vom Materialquerschnitt und der Art des Rohrmaterials unterschiedliche Bemessungen, so dass damit auch der Abstand des querverlaufenden Schlitzes als Rastermarke zu dem Lochbild verändert wird.

Wie vorerwähnt, werden Siebrohre fortlaufend aus einem Flachband hergestellt und zu einem Rohr gezogen und längsgeschweisst. Die Rohre werden dann in Teilstücke von 6, 8, 10 oder 12 m abgetrennt. Bei diesem Abtrennen in die Teilstücke grösserer Länge ist bei der Serienfertigung und im grossen Betrieb praktisch nicht möglich, den Trennschnitt genau in der Radialebene vorzunehmen, an der der Quereinschnitt als Markierungsmarke vorhanden ist. In der Praxis kommt es zu Verschiebungen von einigen Millimetern, so dass vielfach das erste Teilstück eines Schalldämpfer-Innenrohres eine zu kurze Länge hat und als Verschnitt weggeworfen werden muss.

Bei Anlagen zum Absägen von Teilstücken von einem langen Rohr werden viele Rohre grosser Länge, beispielsweise 6 m bis 12 m in einem Vorratsmagazin gelagert. Innerhalb dieser Anlage werden die Rohre vereinzelt und dann Zuführrollen zugeführt, die in Verbindung mit am Rohr anliegenden Treibrädern dieses zu der Säge führen. Das Ausrichten der Rohre in der Weise, dass die Rastermarken in Gestalt eines querverlaufenden Einschnittes an der gegenüberliegenden Seite des das Rohr durchtrennenden Sägeblattes liegen und das Rohr in Bezug auf das Sägeblatt so ausgerichtet wird, dass das Sägeblatt in der Radialebene des gegenüberliegenden Einschnittes ist, erfolgt von Hand. Das Justieren von Hand erfordert bei den heutigen hohen Schnittgeschwindigkeiten und der ansonsten hohen Rationalisierung eine hohe Konzentration, die erfahrungsgemäss nicht über viele Stunden hintereinander vorhanden sein kann. Daher führt dieses Justieren von Hand zu einer hohen Ausschussquote, weil das Siebrohr als Innenrohr zu dem Aussenrohr eine gleiche Länge haben muss. Da auch die Aussenrohre ohne Lochungen nach dem gleichen System mit einem quer verlaufenden Einschnitt als Rastermarken hergestellt werden, sind in manchen Fällen die Fehler in der Länge des Innenrohres und die Fehler in der Länge des Aussenrohres zu addieren. Daher besteht das Bestreben, Innenrohr und Aussenrohr von gleicher Länge mit möglichst geringer Toleranz herzustellen.

Die Einhaltung einer geringstmöglichen Toleranz ist auch deshalb notwendig, weil der Auspuff mit weiteren Rohren versehen ist, die an genau vorbeschriebenen Stellen am Kraftfahrzeug zu befestigen sind.

Die vorliegende Erfindung geht von der Aufgabe aus, eine Vorrichtung zum Ausrichten von langgestreckten Profilen, insbesondere mit vielen Lochungen versehenen Rohren in einer Anlage mit einer Säge zum Abtrennen von Teilstücken zu schaffen, die mit vergleichsweise geringem baulichen Aufwand ein sicheres Abtrennen von Teilstücken stets gleicher Länge mit exakter Ausrichtung des Lochbildes gestattet.

Zur Lösung dieser Aufgabe wird bei einer Vorrichtung zum Ausrichten von langgestreckten Profilen, insbesondere mit vielen Lochungen versehenen Rohren, in einer Anlage mit einer Säge zum Abtrennen von Teilstücken an vorbestimmter Stelle, wobei die Profile an ihrer Oberseite mit in Abständen befindlichen Markierungen in Gestalt von Erhebungen oder Vertiefungen versehen sind, insbesondere von quer zu ihrer Längserstreckung verlaufenden, durch Ausstanzung erhaltenen Einschnitten geringer Länge, erfindungsgemäss vorgeschlagen, dass entlang des zu schneidenden Profils in einem geringen Abstand hintereinander eine Vielzahl von Tastfingern angeordnet sind, die befähigt sind, in den Einschnitt einzugreifen und ein von den Tastfingern entsprechend gesteuerter Antrieb vorgesehen ist, der das Profil in dessen Längsrichtung bewegt und zugleich dreht.

Durch die Vielzahl der Abtastfinger, die auch als Klinken bezeichnet werden können, wird erreicht, dass nach kurzer Zeit und bei einer Bewegung des Profils, insbesondere in Gestalt eines Rohres in dessen Längsrichtung, von nur geringer Wegstrecke einer der Abtastfinger in den Einschnitt eingreift. Diese mechanische Abtastung hat den Vorteil, dass sie äusserst sicher und zuverlässig ist. Sie ist unabhängig von der Wahl des Werkstoffes, von dessen Dicke, dessen elektrischer Leitfähigkeit und auch der Beschaffung der Oberfläche, so davon, ob diese rauh ist gegebenenfalls verschmutzt ist, so beispielsweise durch Öl glatt ist und somit einer elektrisch oder optisch wirkenden Abtasteinrichtung gegenüber Reflektionen zeigen würde. Die erfindungsgemässe mechanische Abtastung durch eine Vielzahl von sich in Längsrichtung des Rohres in einem geringen Abstand befindlichen Tastfingern hat auch den Vorteil, dass sie unabhängig von dem Lochbild ist, weil die Tastfinger nicht in die Lochungen eingreifen bzw. sofern sie in deren Wirkungsbereich kommen, auf diese nicht ansprechen.

In weiterer erfindungsgemässer Ausgestaltung wird vorgeschlagen, dass eine Vielzahl von Tastfingern an einer parallel zum Profil sowie in geringem Abstand dazu verlaufenden gemeinsamen Welle angeordnet sind und jeder einzelne Tastfinger mit einem elektrischen Kontakt versehen ist bzw. mit einem elektrischen Kontakt zusammenwirkt.

Durch diese Lösung wird erreicht, dass mit dem Eingreifen eines der Tastfinger in die Rastermarke ein Signal ausgelöst wird, das die Längsbewegung des Profils und gegebenenfalls auch sofort die Drehung des Profils stoppt, weil die Lage der Rastermarke genau erfasst ist. Diese erfasste Lage kann dann als Wert einer Steuereinrichtung eingegeben werden, die den entsprechenden Vorschub zur Säge veranlasst.

In weiterer erfindungsgemässer Ausgestaltung wird vorgeschlagen, dass jeder Tastfinger als doppelarmiger Hebel ausgebildet ist und an seinem hinteren Ende mit zwei Signalgebern versehen ist, wobei der erste Signalgeber nach dem anfänglichen Eingreifen des vorderen Endes des Tastfingers in den Einschnitt ein Signal zum Stoppen der Axialbewegung des Profils gibt und der zweite Signalgeber das maximale Eingreifen des Tastfingers in den Einschnitt feststellt und ein Signal zum Stoppen der Drehbewegung des Profils abgibt.

Durch diese Lösung wird erreicht, dass mit dem anfänglichen Eingreifen eines der Tastfinger in den Einschnitt die Axialbewegung des Profils gestoppt wird. In vielen Fällen genügt dies zur Bestimmung der Ortslage des Einschnittes innerhalb der Anlage. In vielen Fällen ist es nicht notwendig oder nicht entscheidend, ob der Einschnitt einige Grad mehr oder weniger verdreht vorliegt. Weil das Sägeblatt nicht in den Einschnitt eingreifen soll, genügt es, wenn dieser Einschnitt mehr oder weniger an der Seite ist, die dem ersten Angreifspunkt der Säge an dem Rohr gegenüberliegt. Dennoch kann es vorteilhaft sein, die Lage des Einschnittes, bezogen auf die spätere gegenüberliegende Stellung in der Ebene des Sägeblattes genau und einheitlich festzulegen. Daher der erfindungsgemässe vorteilhafte Vorschlag, dass nach dem Stoppen der Axialbewegung des Profils ein zweiter Signalgeber das maximale Eingreifen des Tastfingers in den Einschnitt feststellt und somit zu einer exakten, stets gleichbleibenden, in der Radialebene des Sägeblattes gegenüberliegenden Stellung des Einschnittes Sorge trägt.

Es sei verstanden, dass an dem Tastfinger auch ein einziger Signalgeber Anwendung finden kann, der abhängig von der Tiefe des Eingreifens des Tastfingers in den Einschnitt die vorbeschriebenen zwei Signale gibt.

In weiterer erfindungsgemässer Ausgestaltung wird vorgeschlagen, dass alle Tastfinger auf einen gemeinsamen elektrischen Kontakt einwirken. Der elektrische Kontakt kann auf vielfache für Kontakte bekannte Weise geschehen. So kann es sich um Kontakte handeln, die auf foto-elektrischem Wege geschehen. Auch kann ein Kontakt ohne Berührung mit einem Gegenkontakt auf der Wirkung von Magneten beruhen. Schliesslich kann ein mechanischer Kontakt erfolgen.

In weiterer erfindungsgemässer Ausgestaltung wird vorgeschlagen, dass jeder Tastfinger mit einem zugeordneten elektrischen Kontakt versehen ist und durch Betätigung dieses zugeordneten Kontaktes der Abstand der Markierung zum Sägeblatt feststellbar ist.

Es ist bereits von grossem Vorteil, dass die quer zur Längserstreckung verlaufenden Einschnitte an der Seite des Rohres liegen, die dem Sägeblatt gegenüberliegt, damit verhindert wird, dass das Sägeblatt nicht an diesen Einschnitt ansetzt. Dies würde in vielen Fällen zu einer Beschädigung des Sägeblattes führen. Der weitere Vorschlag, in der Steuerung festzuhalten, welcher der vielen Tastfinger in einen Einschnitt eingreift, ermöglicht die Bestimmung des exakten Betrages des Vorschubes, der notwendig ist, um das Rohr so vorzuschieben, dass der Einschnitt mit dem Sägeblatt in einer Radialebene vorhanden ist.

Es ist möglich, die Axialverschiebung des Profils und auch die Drehung des Profils durch verschiedene Antriebe vorzunehmen, d.h. durch zwei verschiedene Treibräder, wobei das eine die Axialverschiebung und das andere die Drehung besorgt.

In weiterer erfindungsgemässer Ausgestaltung wird jedoch vorgeschlagen, dass die Axialverschiebung des Profils und die Drehung des Profils durch ein einziges Reibrad erfolgt, das zur Rotation des Profils quer zum Profil und zur Bewegung des Profils in dessen Längsrichtung um einen Winkel schräg zur Längsrichtung des Profils verstellbar ist. Durch diese Massnahme lässt sich eine schnelle und exakte Steuerung der Axialverschiebung und der Rotation erreichen. Um dies zu erreichen, wird in weiterer erfindungsgemässer Ausgestaltung als besonders vorteilhaft vorgeschlagen, dass das Reibrad und dessen elektrischer Antriebsmotor mit Untersetzungsgetriebe an einer Halteplatte befestigt sind, die bei dem in einer horizontalen Ebene bewegten Rohr senkrecht dazu angeordnet ist und an der Halteplatte ein Zylinder mit Kolben angreift, die sich in der Ebene des Profils erstrecken und die Halteplatte um eine vertikale Achse drehen.

Weiterhin ist die Halteplatte zur Anpassung des Treibrades an verschiedene Rohrdurchmesse zusätzlich um eine Achse schwenkbar, die parallel zur Längserstreckung des Profils verläuft.

Obwohl mit der erfindungsgemässen Lösung der Abtastung durch eine Vielzahl mechanischer Tastfinger nur ein geringer Zeitaufwand notwendig ist, wird in weiterer erfindungsgemässer Ausgestaltung vorgeschlagen, diese Arbeit des Ausrichtens vorzunehmen zu einem Zeitpunkt, bei dem das vorhergehende Rohr in Teilstücke zersägt wird.

Um dies zu erreichen, wird in weiterer erfindungsgemässer Ausgestaltung vorgeschlagen, dass die Ausrichtung des Profils auf einer Zwischenablage erfolgt und eine Übergabevorrichtung das ausgerichtete Profil auf die Transportrollen zum Transport an die Säge überträgt.

Besonders vorteilhaft besteht die Zwischenablage aus in Abständen befindlichen Auflagen, die eine konkave Auflagefläche haben, insbesondere eine geneigte Bodenfläche und eine aufstehende Seitenfläche haben und die Auflageflächen mit Lagern, insbesondere Kugellagern versehen sind, die die Drehung des Profils und dessen Verschiebung in Längsrichtung gewährleisten.

Die Zwischenablage ist somit eine Vorstation. Diese kann im wesentlichen in der Ebene der Zuführung des Rohres zu dem Sägeblatt sein. Dies kann geschehen durch eine muldenförmige Vertiefung.

In weiterer erfindungsgemässer Ausgestaltung wird vorgeschlagen, dass die Zwischenablage mit einer Hubeinrichtung zur Verstellung der Höhenlage zur Ausrichtung jeden einzelnen Rohres versehen ist.

Zur Übergabe des ausgerichteten Profils von der Zwischenablage zu den Transportrollen werden in weiterer erfindungsgemässer Ausgestaltung schalenförmige Klauen vorgeschlagen, die an zugeordneten Armen angebracht um eine am Maschinenrahmen angeordnete horizontale Achse schwenkbar sind.

Die Erfindung ist in der Zeichnung beispielhaft erläutert.

Es zeigen:

Figur 1 ein Siebrohr für einen Auspuff,

Figur 2 die Herstellung eines Siebrohres ausgehend von einem Band, im wesentlichen schematisch,

Figur 3 eine Anlage zum Abtrennen von Siebrohren in Seitenansicht,

Figur 4 die Anlage nach Figur 3 in der Ansicht von oben,

Figur 5 die Anlage nach Figur 3 in Stirnansicht,

Figur 6 das Abtasten eines Rohres mit Tastfingern in Seitenansicht,

Figur 7–9 einen Abtastfinger am Rohr in verschiedenen Stellungen,

Figur 10 einen Figur 7 gegenüber abgewandelten Tastfinger,

Figur 11 eine Vielzahl von Tastfingern an einem langen Rohr in Seitenansicht in erster Stellung,

Figur 12 ein langes Rohr in Seitenansicht mit einer Abtastung für den Sägeschnitt,

Figur 13 eine weitere Darstellung mit Förder- und Abtasteinrichtungen,

Figur 14 den Antrieb zur Rotation des Profils in der Ansicht von oben,

Figur 15 die Darstellung nach Figur 14 für Rotation und Axialverschiebung,

Figur 16 u. 17 die Ausrichtung des Rohres auf einer Zwischenablage.

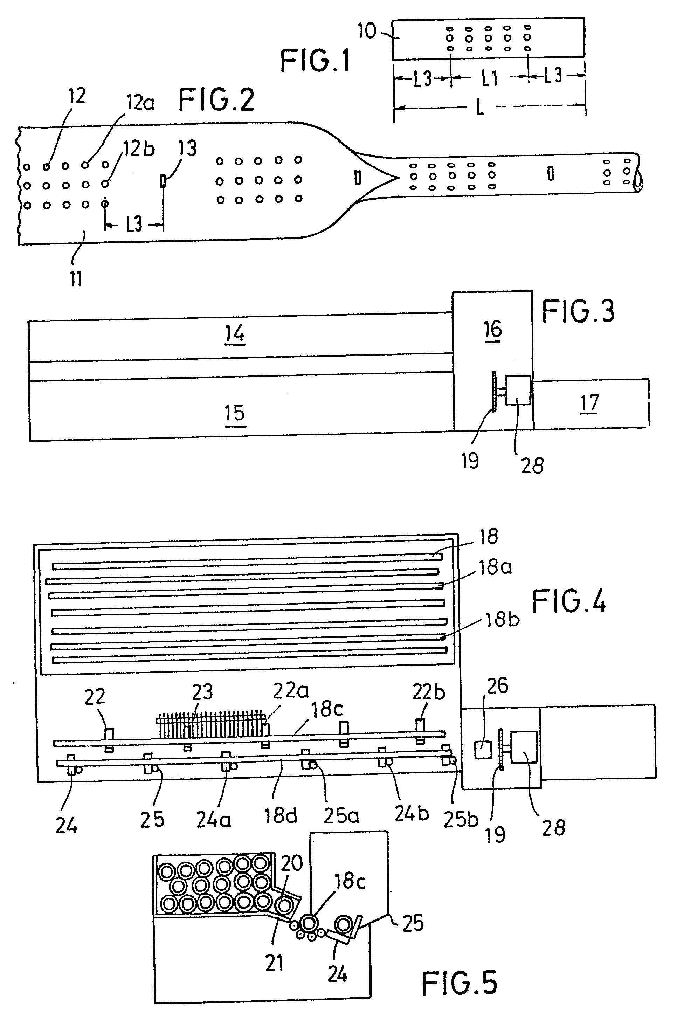

Figur 1 zeigt ein Siebrohr 10 der Länge L von 500 mm mit einem Lochbild einer Länge L1 von 200 mm, so dass das Lochbild zu dem jeweiligen Rand eine Länge L 3 von 150 mm hat.

Figur 2 zeigt die Herstellung der Siebrohre 10. Ausgegangen wird von einem Flachband 11, in das über ein Stanzwerkzeug die Lochungen 12, 12a, 12b usw. angebracht werden. Um den Abstand L 3 zu gewährleisten, ist sogleich in einem Arbeitsgang, d.h. mit einem Werkzeug, ein quer verlaufender Einschnitt 13 angebracht. Anschliessend wird das Band 11 zu dem eigentlichen Rohr 10 gebogen bzw. gezogen und längs geschweisst. Diese Arbeitsweise erfolgt kontinuierlich, so dass ein langes Siebrohr entsteht, das unmittelbar nach der Herstellung in Längen von 6, 8, 10 oder 12 m abgetrennt wird. Zum Herstellen der beispielsweise für Auspuffanlagen an Kraftfahrzeugen vorgesehenen Abschnitte, beispielsweise von 500 mm, wird somit ein langes Rohr vielfach unterteilt. Dies geschieht in einer Anlage, die in Figur 3 in Seitenansicht dargestellt ist und aus den vier Bauteilen Magazin 14, Einzelrohrzuführung 15, Säge 16 und Ablage 17 besteht. In dem Magazin 14 sind eine Vielzahl von langen Rohren 18, 18a, 18b usw. angeordnet, die die zu Figur 2 beschriebenen Lochbilder und die Rastermarken 13 enthalten. Das Abtrennen der Rohrlängen von 8 bis 12 m Länge erfolgt dabei aber in der Regel nicht genau in der Radialebene der Rastermarken, so dass diese nach der Vereinzelung der Rohre in Bezug auf das Sägeblatt 19 ausgerichtet werden müssen. Dies erfolgte bisher von Hand. Auch wurden die Rohre von Hand so gedreht, dass die Rastermarke 13 an der Seite angeordnet ist, die der ersten Angriffsstelle des Sägeblattes 19 gegenüberliegt.

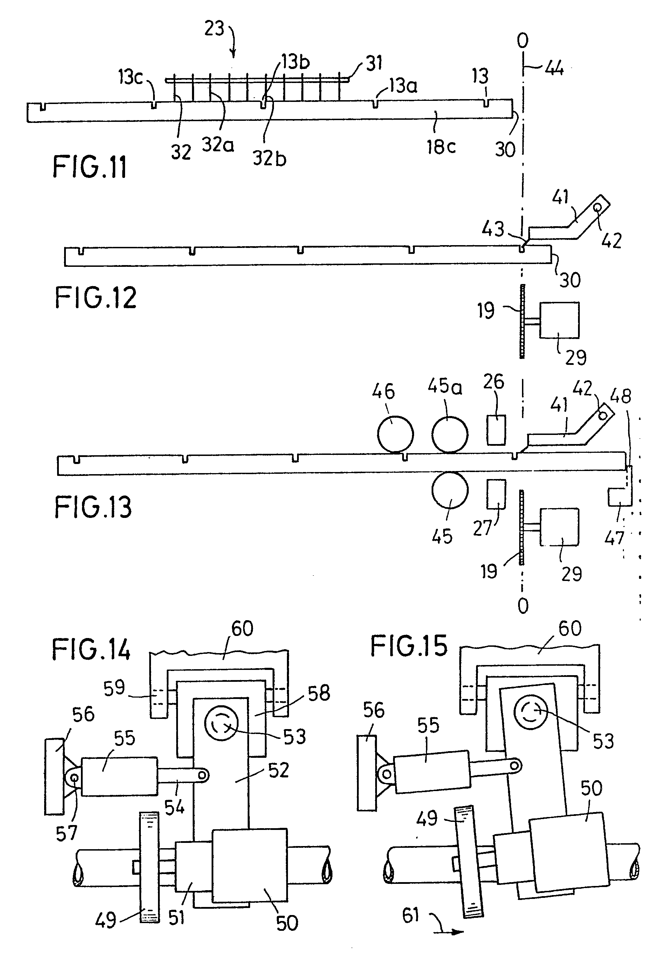

Figur 5 zeigt in Stirnansicht, teilweise im Schnitt, das Magazin 14, in dem die Rohre nebeneinander und übereinander angeordnet sind. Sie werden vereinzelt innerhalb eines Kanals mit einer oberen Wandung 20 und unteren Wandung 21, so dass ein einzelnes Rohr 18c vorliegt. Dieses einzelne Rohr 18c ist durch in einem grösseren seitlichen Abstand befindliche Lager 22, 22a, 22b usw. gelagert und wird in seiner Ortslage durch eine Messeinrichtung 23 erfasst und eine im einzelnen in den Figuren 14 und 15 dargestellte Steuereinrichtung so bewegt, dass seine Ortslage in Bezug auf die Rastermarke 13 genau erfasst und daher die zu transportierende Wegstrecke zum Sägeblatt 19 festliegt und durch entsprechende Werte in die Steuervorrichtung eingegeben wird.

Figur 4 zeigt das Rohr 18c in einer Zwischenablage und ein weiteres Rohr 18d auf im wesentlichen horizontalen Rollen 24, 24a und 24b sowie anliegend an vertikalen Rollen 25, 25a, 25b als Transporteinrichtung zur Säge 19.

Mit 26 ist eine Klemmbacke bezeichnet, die mit einer Gegenklemmbacke 27 (Figur 13) zusammenwirkt und das zu schneidende Rohr festklemmt. Mit 28 ist die Verstellvorrichtung für das Sägeblatt bezeichnet, das über einen Elektromotor 29 angetrieben ist.

Das Grundprinzip der Erfindung wird anhand der Figuren 11 bis 13 erläutert. Das Rohr 18c einer Länge von beispielsweise 10 m hat in einem Abstand von 50 cm die Rastermarken 13, 13a, 13b, 13c usw. die die spätere Länge L des Siebrohres 10 bestimmen. Das Rohr hat eine vordere Schnittkante 30, die zu der Rastermarke 13 einen Abstand hat.

Die Messeinrichtung 23 besteht aus einer Achse 31, die sich parallel zur Längsachse des Rohres 18c erstreckt. An dieser Achse 31 sind in einem vergleichsweise dichten Abstand eine grosse Vielzahl von Tastfingern 32, 32a, 32b usw. vorhanden. Die Messeinrichtung erstreckt sich über eine Länge von 80 cm. Vorhanden sind 120 Tastfinger, deren Abstand 5 mm oder 1 cm entspricht. Die Länge der Messeinrichtung und der Abstand der Tastfinger ist der Länge der üblicherweise abzuschneidenden Rohrabschnitte angepasst. Es kann allgemein dargelegt werden, dass die Länge der Messeinrichtung mit den Tastfingern grösser ist als der übliche Abstand einer Marke 13 zur nächsten Marke 13a.

Das Rohr 18c wird bei anliegenden Tastfingern gedreht und in Längsrichtung verschoben. Das Verschieben erfolgt in der Regel in der Richtung, in der das Rohr auch dem Sägeblatt 19 zugeführt wird.

Es kann aber auch eine Verschiebung in entgegengesetzter Richtung erfolgen. Durch die Drehung und Verschiebung wird erreicht, dass einer der Tastfinger in den Einschnitt 13 eingreift. Es ist auch möglich, dass zwei Tastfinger in zugeordnete Einschnitte eingreifen. Das ist gegeben, sofern die Tastfinger einen solchen Abstand haben, dass der Abstand der Einschnitte ein Vielfaches darstellt. Bezogen auf Figur 11 wäre das der Fall, sofern der Abstand des Fingers 32 zum Finger 32b dem Abstand eines Einschnittes 13b zum benachbarten Einschnitt 13c entsprechen würde.

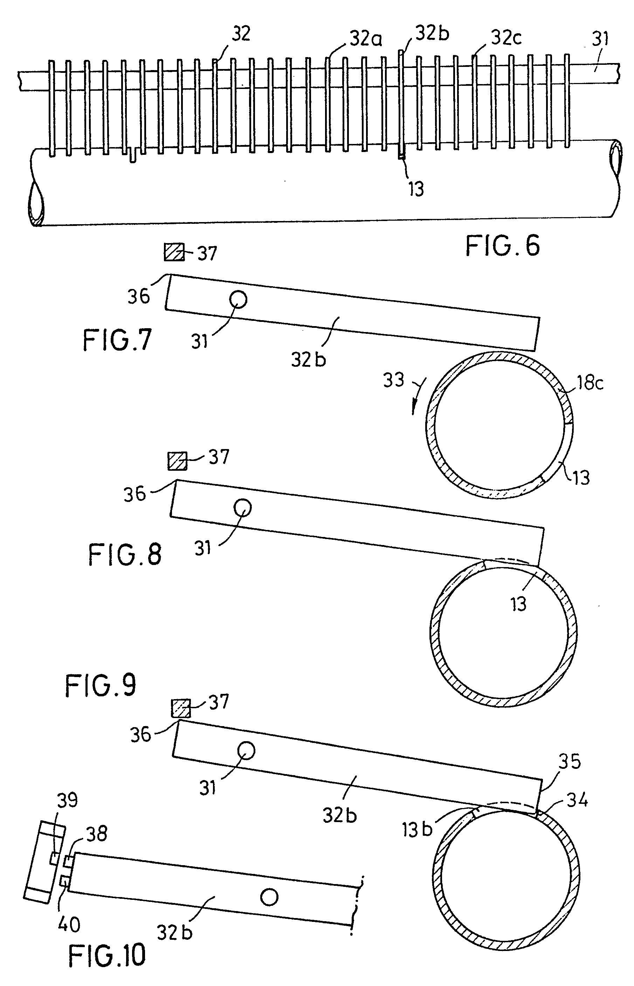

Figur 6 zeigt in Übereinstimmung mit Figur 11, dass der Finger 32b in den Einschnitt 13 eingreift. Dies wird anhand der Figuren 7 bis 9 erläutert. Das Rohr 18c mit dem Einschnitt 13 wird in angegebener Pfeilrichtung 33 gedreht und zugleich in Längsrichtung verschoben. Die Verschiebung in Längsrichtung ist gering. Sie entspricht einer Schraubenlinie. Nach Figur 7 liegt der Finger 32b am Aussenumfang des Rohres 18c tangential an. Nach Figur 8 hat das Rohr eine solche Drehung erhalten, dass der Einschnitt 13 oben liegt und der Finger teilweise in den Einschnitt eingreift. Nach Figur 9 liegt der Finger 32b vollkommen in den Einschnitt 13b, sogar mit der Massgabe, dass die Fläche 34 des Rohres an der Stirnfläche 35 des Fingers zur Anlage kommt und diesen auch in Längsrichtung drückt.

Der doppelarmige, um die Drehachse 31 schwenkbare Finger 32b hat an seinem äusseren Ende in Gestalt der Kante 36 eine Kontaktfläche, die zu der Kontaktleiste 37 in der Stellung nach Figur 7 einen grösseren, in der Stellung nach Figur 8 einen geringeren Abstand hat. In der Stellung nach Figur 9 liegt der Kontakt 36 an der Leiste 37 an, so dass ein Impuls gegeben wird, der die Drehung des Rohres beendet. Bei der Stellung nach Figur 7 wird dar Rohr gedreht und axial verschoben. Sofern der Tastfinger nach Figur 8 auch nur teilweise in den Einschnitt eingreift, dann bedeutet dies, dass eine Axialverschiebung des Rohres nicht mehr notwendig ist, weil die Ortslage des Schlitzes in Bezug auf die Längserstreckung des Rohres ermittelt worden ist. Daher wird bei der Stellung des Fingers nach Figur 8 ein erster Impuls ausgelöst, der die Axialverschiebung des Rohres stillsetzt. Bei der Stellung nach Figur 9 wird ein weiterer Impuls gegeben, der auch die Rotation des Rohres beendet.

Figur 10 zeigt eine mögliche Lösung der zwei zu gebenden Signale. So ist an dem Ende des Hebels 32b ein erster Kontakt 38 vorhanden, der mit einem feststehenden Gegenkontakt 39 zusammenwirkt und beinhaltet, dass die Axialverschiebung des Rohres beendet wird. Sofern der weitere Kontakt 40 mit dem Gegenkontakt 39 zur Wirkung kommt, dann wird ebenfalls die Drehung des Rohres stillgesetzt.

Die vorgenannten Kontaktgeber können mechanischer Art sein. Geeignet sind ebenfalls berührungslose, elektromagnetische Schalter. Schliesslich kann eine Fotozellensteuerung Anwendung finden.

Nachdem entsprechend dem in den Figuren 7 bis 9 dargestellten Prinzip gewährleistet ist, dass die Einschnitte 13 des Rohres stets oben liegen, ist auch gewährleistet, dass ein Kontaktfinger 41 zur Wirkung kommt, der um die quer zur Längserstreckung des Rohres verlaufende Achse 42 schwenkbar ist und an seinem vorderen Ende eine gehärtete Spitze 43 hat, die befähigt ist, in den ersten Einschnitt 13 einzugreifen. Die Spitze 43 ist in der Radialebene des Sägeblattes 19 vorhanden, so dass gewährleistet ist, dass das Sägeblatt 19, beispielsweise einer Breite von 2 mm, den Sägeschnitt genau in der Radialebene des Einschnittes 13 ausführt, der eine Breite von 1,5 mm hat.

Figur 12 zeigt, wie vorerwähnt, dass das Rohr 18c mit der Schnittfläche 30 einen kleinen Überstand hat, der Abfall werden wird.

Da entsprechend Figur 11 der Finger 32b in den Einschnitt 13b eingreift, kann über einen entsprechenden Rechner der Abstand des Einschnittes 13b zur Radialebene des Sägeblattes 19, die in gestrichelter Linie mit 44 bezeichnet ist, festgestellt werden. Diese Radialebene wird nachfolgend als Nullebene bezeichnet. Durch die vorgenannte Ortslagebestimmung des Einschnittes 13b ergibt sich zugleich die Ortslage des ersten Einschnittes und dessen Abstand zur Nullebene und der notwendige Vorschub des Rohres, um den ersten Schnitt in der Ebene des Einschnittes 13 durchzuführen. Dies erfolgt zunächst mit einem Schnellhub um den vorgegebenen bzw. errechneten Betrag. Dann wird bei einer Wegstrecke von ca. 2 cm auf Kriechgang umgeschaltet, so dass die Spitze 43 des Tasters 41 in den Einschnitt 13 eingreifen kann. Der Antrieb des Rohres im Schnellgang und im Kriechgang erfolgt durch die Antriebsrolle 45a in Verbindung mit der Gegendruckrolle 45. Die Messung der zurückgelegten Wegstrecke erfolgt durch das Messrad 46. Sobald die Spitze 43 des Tasters in den Einschnitt 13b gelangt ist, dann wird der Vorschub, hier der Kriechgang, sofort stillgesetzt. Dann werden zugleich die Klemmbacken 26 und 27 geschlossen. Die Säge 19 wird dann hochgefahren. Zugleich wird der Taster 41 angehoben.

Anschliessend erfolgt im Schnellgang ein erneuter Vorschub des Rohres, und zwar bei einem Abstand der Einschnitte von beispielsweise 50 cm um einen Betrag von 48 cm. Um hier eine ausreichende Sicherheit zu haben, ist im Bereich der Säge und einem Abstand dazu, die der abzuschneidenden Länge entspricht, um die Achse 47 schwenkbar der Endlagenschalter 48 vorhanden, der den Schnellgang ausschaltet und in den Kriechgang umschaltet, damit die Spitze des Tasters 41 in den nachfolgenden Einschnitt 13a gelangen kann und die vorgeschriebenen Massnahmen zum Stoppen des Kriechganges zum Schneiden des Rohres gewährleistet.

Figur 14 zeigt das Treibrad 49 zur Drehung und Axialverschiebung des Rohres, damit einer der Tastfinger 32 in einen Einschnitt gelangt. Das Treibrad 49 wird von einem Elektromotor 50 über ein Untersetzungsgetriebe 51 angetrieben. Diese Anordnung ist gelagert an einer Halteplatte 52, die um die vertikale Drehachse 53 schwenkbar ist. An der Platte 52 greift die Kolbenstange 54 eines Zylinders 55 an, der am Maschinenrahmen 56 über einen Bolzen 57 drehgelenkig verbunden ist. Um eine Anpassung des Treibrades 49 an verschiedene Rohrdurchmesser zu haben, ist der Drehzapfen 53 an einer Platte 58 befestigt, die über einen horizontalen Drehzapfen 59, gelagert im Maschinenrahmenteil 60, an- und abhebbar ist.

Figur 14 zeigt die Stellung, bei der das Treibrad 49 rechtwinklig zur Längsachse des Rohres verläuft und somit dieses lediglich drehen kann. Bei der Stellung nach Figur 15 ist es um einen Winkelbetrag von 3° zur Ausgangsstellung verschwenkt, so dass das Rohr ebenfalls in angegebener Pfeilrichtung 61 zusätzlich zur Rotation in Längsrichtung verschoben wird.

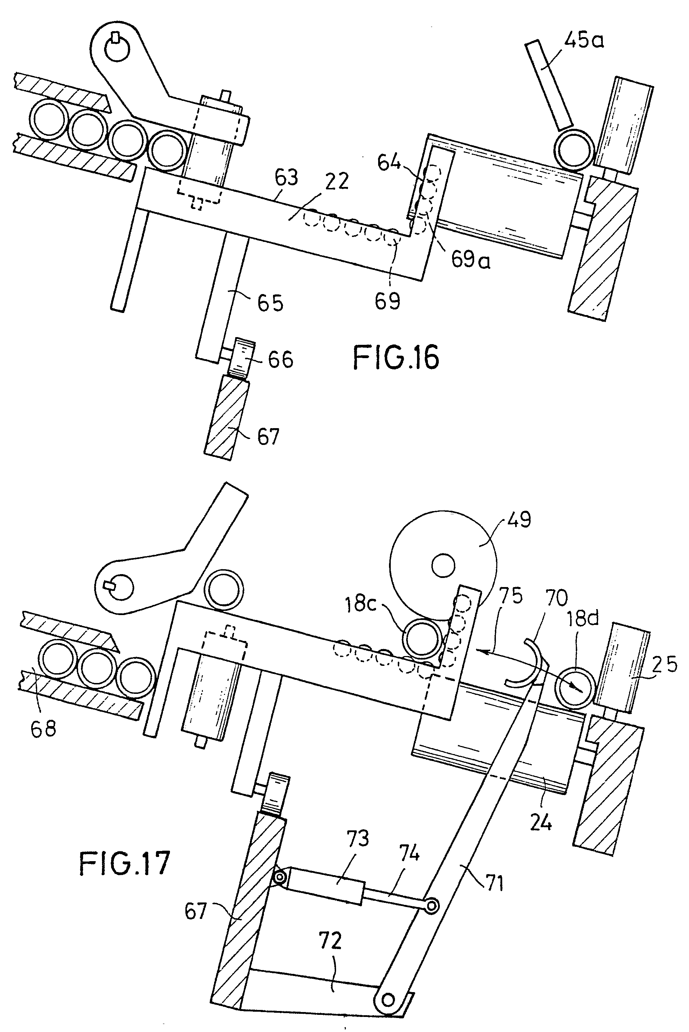

Die Figuren 16 und 17 zeigen, dass die Ausrichtung des Rohres auf einer Zwischenablage 22 erfolgt, die die geneigte Bodenfläche 63 und eine rechtwinklig dazu angeordnete Seitenfläche 64 hat. Die Zwischenablage schliesst sich an den Zulauf der bereits vereinzelten Rohre an. Sie hat an ihrer unteren Seite einen Balken 65, der mit hintereinander angeordneten Laufrädern 66 versehen ist, die an der Oberseite einer in Längsrichtung verschiebbaren, mit Profil versehenen Schiene 67 anliegen und dadurch, wie Figur 17 zeigt, die Zwischenablage anhebt. Mit dem Anheben wird auch ein einzelnes Rohr aus der Zufuhrrinne 68 entnommen. An ihrer Oberseite 63 und der Seitenwandung 64 sind eine Vielzahl von Kugeln 69, 69a gelagert, die eine Drehung und zugleich Verschiebung in Längsrichtung gewährleisten.

In Figur 17 ist das in Figur 14 dargestellte Antriebsrad 49 zu ersehen, das an dem Rohr 18c anliegt, während das Rohr 18d auf den Rollen 24 aufliegt und seitlich von den Rollen 25 abgestützt zur Säge transportiert wird. Die Übergabe eines Rohres von der Zwischenablage 22 in die Transporteinrichtung 24, 25 erfolgt durch schalenförmige Klauen, die an zugeordneten Hebeln 71 befestigt ist. Ein Hebel 71 ist an einem Kragen 72 der Schiene 67 drehbar gelagert und wird angetrieben durch eine Kolbenzylinderanordnung 73 und 74. Der Hebel 71 wird in angegebener Doppelpfeilrichtung 75 verschwenkt. Es sei verstanden, dass die schalenförmigen Klauen 70 zwischen den in Figur 4 dargestellten Zwischenablagen 22, 22a und den Transportrollen 24, 24a usw. angeordnet sind, so dass die einfache Übergabe des Rohres 18c von der Ortslage zu dessen Ausrichten auf die Transportrollen 24 zu dessen Transport zum Sägeblatt möglich ist.

Sofern durch das Ziehen des Rohres der Einschnitt 13 zu dem Lochbild einen veränderten Abstand hat, kann mit dem Eingreifen der Spitze 43 des Tasters 41 in den Einschnitt durch eine geringe Verschiebung des Sägeblattes in Längsrichtung des Rohres dieser Änderung zusätzlich Rechnung getragen werden.

## Patentansprüche

1. Vorrichtung zum axialen und radialen Positionieren von langgestreckten Profilen (18), insbesondere mit vielen Lochungen versehenen Rohren in einer Anlage mit einer Säge (16) zum Abtrennen von Teilstücken (L) an vorbestimmter Stelle, wobei die Profile an ihrer Oberseite mit in Abständen befindlichen Rastermarken in Gestalt von Erhebungen oder Vertiefungen versehen sind, insbesondere von quer zu ihrer Längserstreckung verlaufenden, durch Ausstanzung erhaltenen Einschnitten (13) geringer Länge, dadurch gekennzeichnet, dass entlang des zu schneidenden Profils (18) in einem geringen Abstand hintereinander eine Vielzahl von Tastfingern (32) angeordnet sind, die befähigt sind, in den Einschnitt (13) einzugreifen und ein von den Tastfingern entsprechend gesteuerter Antrieb (49) vorgesehen ist, der das Profil (18) in dessen Längsrichtung bewegt und zugleich dreht.

2. Vorrichtung nach Anspruch 1, dadurch gekennzeichnet, dass eine Vielzahl an Tastfingern (32, 32a) an einer parallel zum Profil sowie in geringem Abstand dazu verlaufenden gemeinsamen Welle (31) angeordnet sind und jeder einzelne Tastfinger (32) mit einem elektrischen Kontakt (36, 38, 40) versehen ist bzw. mit einem elektrischen Kontakt (37) zusammenwirkt.

3. Vorrichtung nach Anspruch 1, dadurch gekennzeichnet, dass jeder Tastfinger (32) als doppelarmiger Hebel ausgebildet ist und an seinem hinteren Ende mit zwei Signalgebern (38, 40) versehen ist, wobei der erste Signalgeber (38) nach dem anfänglichen Eingreifen des vorderen Endes des Tastfingers in den Einschnitt (13) ein Signal zum Stoppen der Axialbewegung des Profils (18) gibt und der zweite Signalgeber (40) das maximale Eingreifen des Tastfingers in den Einschnitt (13) feststellt und ein Signal zum Stoppen der Drehbewegung des Profils abgibt.

4. Vorrichtung nach den Ansprüchen 1 bis 3, dadurch gekennzeichnet, dass alle Tastfinger (13) auf einen gemeinsamen elektrischen Kontakt (37) einwirken.

5. Vorrichtung nach den Ansprüchen 1 bis 3, dadurch gekennzeichnet, dass jeder Tastfinger (13) mit einem zugeordneten elektrischen Kontakt versehen ist und durch Betätigung dieses Kontaktes der Abstand der Markierung (13) zum Sägeblatt (19) feststellbar ist.

6. Vorrichtung nach Anspruch 1, dadurch gekennzeichnet, dass die Axialverschiebung und Drehung des Profils (18) durch ein Reibrad (49) erfolgt, das zur Rotation des Profils quer zum Profil und zur Bewegung des Profils in dessen Längsrichtung in einen Winkel schräg zur Längsrichtung des Profils verstellbar ist.

7. Vorrichtung nach Anspruch 6, dadurch gekennzeichnet, dass das Reibrad (49) und dessen elektrischer Antriebsmotor (50) mit Untersetzungsgetriebe (51) an einer Halteplatte (52) befestigt sind, die bei dem in einer horizontalen Ebene bewegten Rohr (18) senkrecht dazu angeordnet ist und an der Halteplatte ein Zylinder (55) mit Kolbenstange (54) angreift, die sich in der Ebene des Profils (18) erstrecken und die Halteplatte (52) um eine vertikale Achse (53) drehbar ist.

8. Vorrichtung nach Anspruch 7, dadurch gekennzeichnet, dass die Halteplatte (52) zur Anpassung des Reibrades (49) an verschiedene Rohrdurchmesser und zu dessen Abheben zusätzlich um eine Achse (59) schwenkbar ist, die parallel zur Längserstreckung des Profils (18) verläuft.

9. Vorrichtung nach Anspruch 1 und einem oder mehreren der Ansprüchen 2–8, dadurch gekennzeichnet, dass diese einen um eine quer zur Längserstreckung des Rohres (18c) verlaufende Achse (42) schwenkbaren Taster (41) mit einer an dessen vorderem Ende angeordneten gehärteten Spitze (43) aufweist und diese zum Eingriff in den oben liegenden Einschnitt (13) des Rohres (18c) ausgebildet und in der Radialebene des Sägeblattes (19) angeordnet ist.

10. Vorrichtung nach Anspruch 1 und einem oder mehreren der Ansprüche 2 bis 9, dadurch gekennzeichnet, dass die Ausrichtung des Profils (18) auf einer Zwischenablage (22) erfolgt und eine Übergabevorrichtung (70, 71) das ausgerichtete Profil auf die Transportrollen (24) zum Tansport an die Säge (19) überträgt.

11. Vorrichtung nach Anspruch 10, dadurch gekennzeichnet, dass die Zwischenablage (22) aus in Abständen befindlichen Auflagen (22a, 22b) besteht, die eine konkave oder abgewinkelte Auflagefläche (63, 64) haben, insbesondere eine geneigte Bodenfläche und eine aufstehende Seitenfläche haben und die Auflageflächen (63, 64) mit Lagern (69), insbesondere in Gestalt von Kugeln versehen sind, die die Drehung des Profils (18) und dessen Verschiebung in Längsrichtung gewährleisten.

12. Vorrichtung nach Anspruch 11, dadurch gekennzeichnet, dass die Zwischenablage (22) mit einer Hubeinrichtung (64, 67) zur Verstellung der Höhenlage zur Ausrichtung jedes einzelnen Rohres (18) versehen ist.

13. Vorrichtung nach Anspruch 10, dadurch gekennzeichnet, dass zur Übergabe des ausgerichteten Profils von der Zwischenablage (22) auf die Transportrollen (24) schalenförmige Klauen (70) vorhanden sind, die an zugeordneten Armen (71) angelenkt und eine am Profilrahmen angeordnete horizontale Achse schwenkbar sind.

**Claims**

1. Device for the axial and radial positioning of elongate profiles (18), in particular of tubes provided with many perforations, in a plant with a saw (16) for the severing of piece parts (L) at a predetermined place, wherein the profiles are provided at their upper side with raster markings disposed at spacings and in the form of protrusions or depressions, in particular of notches (13) of small length, which extend transversely to the longitudinal extent of the profiles and were obtained through punching-out, characterised thereby, that a plurality of feeler fingers (32), which are capable of engaging into the notch (13), are arranged one behind the other at a small spacing along the profile (18) to be cut and a drive (49) is provided, which is appropriately controlled by the feeler fingers and which moves the profile (18) in its longitudinal direction and turns it at the same time.

2. Device according to claim 1, characterised thereby, that a plurality of feeler fingers (32, 32a) are arranged on a common shaft (31) extending parallelly to the profile as well as at a small spacing therefrom and each individual feeler finger (32) is either provided with an electrical contact (36, 38, 40) or co-operates with an electrical contact (37).

3. Device according to claim 1, characterised thereby, that each feeler finger (32) is constructed as double-armed lever and provided at its rear end with two signal transmitters (38, 40), wherein the first signal transmitter (38) after the initial engaging of the front end of the feeler finger into the notch (13) gives a signal for the stopping of the axial movement of the profile (18) and the second signal transmitter (40) ascertains the maximum engagement of the feeler finger into the notch (13) and gives a signal for the stopping of the rotary movement of the profile.

4. Device according to the claims 1 to 3, characterised thereby, that all feeler fingers (32) act on a common electrical contact (37).

5. Device according to the claims 1 to 3, characterised thereby, that each feeler finger (32) is provided with an associated electrical contact and the spacing of the marking (13) from the saw blade (19) is ascertainable through actuation of this contact.

6. Device according to claim 1, characterised thereby, that the axial displacement and rotation of the profile (18) takes place through a friction wheel (49), which is adjustable transversely to the profile for the rotation of the profile and at an angle oblique to the longitudinal direction of the profile for movement of the profile in its longitudinal direction.

7. Device according to claim 6, characterised thereby, that the friction wheel (49) ad its electrical drive motor (50) with stepdown gear (51) are fastened at a mounting plate (52), which in the case of a tube (18) being moved in a horizontal plane is arranged perpendicularly thereto and a cylinder (55) with piston rod (54), which extend in the plane of the profile (18), engage at the mounting plate and the mounting plate (52) is rotatable about a vertical axle (53).

8. Device according to claim 7, characterised thereby, that the mounting plate (52) is additionally pivotable about an axle (59), which extends parallelly to the longitudinal extent of the profile (18) for adaptation of the friction wheel (49) to different tube diameters and for the raising thereof.

9. Device according to claim 1 and one or more of the claims 2 to 8, characterised thereby, that this displays a feeler (41), which is pivotable about an axle (42) extending transversely to the longitudinal extent of the tube (18c), with a hardened tip (43) arranged at its front end and this is constructed for engagement into the upwardly lying notch (13) of the tube (18c) and arranged in the radial plane of the saw blade (19).

10. Device according to claim 1 and one or more of the claims 2 to 9, characterised thereby, that the orientation of the profile (18) takes place on an intermediate deposit (22) and a transfer device (70, 71) transfers the oriented profile to the transport rollers (24) for the transport to the saw (19).

11. Device according to claim 10, characterised thereby, that the intermediate deposit (22) consists of supports (22a, 22b), which are disposed at spacings and have a concave or angled support surface (63, 64), in particular an inclined base surface and an upright side surface, and the support surfaces (63, 64) are provided with bearings, in particular in the form of balls, which assure the rotation of the profile (18) and its displacement in longitudinal direction.

12. Device according to claim 11, characterised thereby, that the intermediate deposit (22) is provided with a lifting equipment (64, 67) for adjustment of the height position for the orientation of each individual tube (18).

13. Device according to claim 10, characterised thereby, that bowl-shaped claws (70), which are articulated at associated arms (71) and pivotable about a horizontal axle arranged at the profile frame, are present for the transfer of the oriented profile from the intermediate deposit (22) to the transport rollers (24).

**Revendications**

1. Dispositif pour le positionnement axial et radial de profilés (18) ayant une forme allongée, en particulier de tuyaux perforés, dans une installation comprenant une scie (16) pour le découpage de pièces L à des endroits prédéterminés, la face supérieure des profilés étant munie de repères espacés ayant la forme d'élévations ou de surépaisseurs en particulier d'entailles courtes (13) obtenues par poinçonnage, s'étendant perpendiculairement au sens longitudinal du tuyau, dispositif caractérisé en ce que, le long du profilé (18) à découper, à une faible distance les uns derrière les autres, se trouve une pluralité de palpeurs (32) qui sont adaptés à pénétrer dans l'entaille (13) et qu'il est prévu un entraînement (49) commandé de façon appropriée par les palpeurs qui assure le déplacement longitudinal et la rotation simultanée du profilé (18).

2. Dispositif selon la revendication 1, caractérisé en ce qu'une pluralité de palpeurs (32, 32a) est disposée sur un arbre commun (31) parallèle au profilé et situé à une faible distance de celui-ci et que chaque palpeur (32) individuel est munie d'un contact électrique (36, 38, 40) ou bien coopère avec un contact électrique (37).

3. Dispositif selon la revendication 1, caractérisé en ce que chaque palpeur (32) est conçu sous la forme d'un levier à deux bras et qu'il est muni, sur son extrêmité arrière, de deux émetteurs de signal (38, 40) le premier émetteur de signal (38) émettant un signal après la pénétration initiale de l'extrêmité avant du palpeur dans l'entaille (13) pour stopper le déplacement axial du profilé (18) tandis que le deuxième émetteur de signal (40) détermine la pénétration maximale du palpeur dans l'entaille (13) et émet un signal pour stopper la rotation du profilé.

4. Dispositif selon les revendications 1 à 3, caractérisé en ce que tous les palpeurs (13) agissent sur un contact électrique commun (37).

5. Dispositif selon les revendications 1 à 3, caractérisé en ce que chaque palpeur (13) est muni d'un contact électrique associé et que par actionnement de ce contact, la distance du repère (13) à la lame de scie (19) peut être déterminée.

6. Dispositif selon la revendication 1, caractérisé en ce que le déplacement axial et la rotation du profilé (18) s'effectuent par l'intermédiaire d'une roue de friction (49) qui, pour assurer la rotation du profilé, est ajustable dans le sens perpendiculaire du profilé et, pour assurer le déplacement du profilé dans le sens longitudinal, peut être ajusté en formant un angle avec le sens longitudinal du profilé.

7. Dispositif selon la revendication 6, caractérisé en ce que la roue de friction (49) et son moteur électrique (50) sont fixés, avec un démultiplicateur (51), sur une plaque de fixation 52 qui, pour un tuyau (18) déplacé dans un plan horizontal, est disposé de façon perpendiculaire par rapport au tuyau et que la plaque di fixation est soumise à l'action d'un cylindre (55) avec une tige de piston (54) qui s'étend dans le plan du profilé (18) et que la plaque de fixation (52) est montée en rotation autour d'un axe vertical (53).

8. Dispositif selon la revendication 7, caractérisé en ce que la plaque de fixation (52), pour l'ajustement de la roue de friction (49) à différents diamètres de tuyaux et pour son soulèvement, est pivotable autour d'un axe (59) qui s'étend parallèlement au sens longitudinal du profilé (18).

9. Dispositif selon la revendication 1 ou selon l'une des revendications 2 à 8, caractérisé en ce que le dispositif présente un palpeur (41) pivotable autour de l'axe (42) s'étendant perpendiculairement au sens longitudinal du tuyau (18c), avec une pointe dure (43) disposée à l'extrémité avant du palpeur et que celle-ci est conçue pour pénétrer dans l'entaille (13) située sur le dessus du tuyau (18c) et qu'elle est disposée dans le plan radial de la lame de scie (19).

10. Dispositif selon la revendication 1, et selon une ou plusieurs des revendications 2 à 9, caractérisé en ce que l'ajustement du profilé (18) s'effectue sur un poste intermédiaire (22) et qu'un dispositif de transfert (70, 71) transfert le profilé ajusté sur les rouleaux transporteurs (24), pour le transporter vers la scie 19.

11. Dispositif selon la revendication 10, caractérisé en ce que le poste intermédiaire (22) est constitué par des supports espacés (22a, 22b) qui présentent une surface d'appui concave ou coudée (63, 64), en particulier une face de fond inclinée et une face latérale perpendiculaire, et que les surfaces d'appui (63, 64) sont munies de paliers (69), en particulier sous la forme de billes, qui assurent la rotation du profilé (18) et son déplacement dans le sens longitudinal.

12. Dispositif selon la revendication 11, caractérisé en ce que le poste intermédiaire (22) est muni d'un dispositif de levage (64, 67) pour réglage de la position en hauteur pour l'ajustement de chaque tuyau individuel (18).

13. Dispositif selon la revendication 10, caractérisé en ce que pour le transfert du profilé ajusté du poste intermédiaire (22) sur les rouleaux transporteurs (24) il est prévu des griffes en forme de coquilles (70) qui sont articulées sur des bras associés (71) et qui sont pivotables autour d'un axe horizontal monté sur le châssis.

FIG.1

10

|←—L3—→|←—L1—→|←—L3—→|
|←————————L—————————→|

12  12a  FIG.2

12b  13

L3

11

L3

FIG.3

14

15

16

17

19  28

18

18a

18b

FIG.4

22  23  22a  18c  22b  26

24  25  24a  18d  25a  24b  25b  19  28

20  18c

21  24  25

FIG.5

FIG.6

FIG.7

FIG.8

FIG.9

FIG.10

FIG.11

FIG.12

FIG.13

FIG.14

FIG.15

45a

63 22 64

69a

65 69

66 FIG.16

67

49

18c 75 70 18d

25

68

73 74

FIG.17

67 71

72 24